# EUROPÄISCHE PATENTSCHRIFT

(11) **EP 3 335 156 B1**
(45) Veröffentlichungstag und Bekanntmachung des Hinweises auf die Patenterteilung: **04.08.2021**
(21) Anmeldenummer: 16756942.5
(22) Anmeldetag: 09.08.2016
(51) Int. Cl.: G06K 19/073, H01L 23/00, G07F 7/08, G06K 19/077

(54) **TRAGBARER DATENTRÄGER, INSBESONDERE CHIPKARTE**
PORTABLE DATA CARRIER, IN PARTICULAR CHIP CARD
SUPPORT DE DONNEES PORTABLE, EN PARTICULIER CARTE A PUCE

(30) Priorität: 11.08.2015 DE 102015010458
(43) Veröffentlichungstag der Anmeldung: 20.06.2018
(73) Patentinhaber: Giesecke+Devrient Mobile Security GmbH, 81677 München (DE)
(72) Erfinder: TARANTINO, Thomas, 83410 Laufen (DE); BEHLENDORF, Sascha, 85560 Ebersberg (DE); STROBL, Werner, 81927 München (DE); GIL, Rodrigue, 81667 München (DE); GAWLAS, Florian, 80805 München (DE)
(86) Internationale Anmeldenummer: PCT/EP2016/001365
(87) Internationale Veröffentlichungsnummer: WO 2017/025187

(56) Entgegenhaltungen:
- WO-A1-97/22084
- WO-A1-98/18102
- DE-A1- 3 222 288
- DE-A1- 19 601 390
- GB-A- 2 407 189
- US-A1- 2003 107 877
- US-A1- 2009 065 591
- US-A1- 2012 241 524
- US-A1- 2013 207 783
- US-B1- 6 264 108

## Beschreibung

Die Erfindung betrifft einen tragbaren Datenträger und insbesondere eine Chipkarte, wie z.B. eine Smartcard.

Tragbare Datenträger und insbesondere Chipkarten werden in einer Vielzahl von Anwendungsgebieten eingesetzt. Häufig dienen solche Datenträger zur Durchführung von monetären Transaktionen. Dabei besteht das Problem, dass der tragbare Datenträger durch einen Nutzer oftmals nicht verwendet wird, obwohl der Nutzer den tragbaren Datenträger mit sich führt.

US 6264108 B1 offenbart eine Chipkarte, deren Elektronik mit einer empfindlichen Abschirmung überzogen ist. Diese wirkt als Sensor und erkennt invasive Angriffe. Beim Versuch, die Abschirmung zu durchdringen werden die in der Karte gespeicherten Daten gelöscht. Die Chipkarte kann außerdem mit einem LC-Display ausgestattet sein.

Die Druckschrift GB 2 407 189 A offenbart eine Smartcard, deren Aktivierung an Detektionsereignisse gekoppelt ist, welche von unterschiedlichen Sensoren auf der Karte detektiert werden, wie z.B. von einem Lichtsensor, einem Drucksensor, einem Wärmesensor und dergleichen.

DE 3222288 A1 offenbart eine Mikroprozessorkarte mit einem Display, einer Tastatur sowie einem Lautsprecher. Der Lautsprecher kann auch als Mikrofon zur Sprachausgabe dienen.

Aus der US 20130207783 A1 ist ein elektronisches Paket bekannt, das eine Platine mit einem Prozessor sowie ein mehrteiliges Gehäuse umfasst. Die einzelnen Teile des Gehäuses sind mit RFID-Einheiten versehen, die mit dem Prozessor kommunizieren. Die räumliche Anordnung der RFID-Einheiten ist im Prozessor hinterlegt. Wird eine RFID-Einheit aus ihrer vorgegebenen Position entfernt, wird dies von dem Prozessor erkannt und angezeigt. Aufgabe der Erfindung ist es, einen tragbaren Datenträger und insbesondere eine Chipkarte mit erweiterter Funktionalität gegenüber herkömmlichen tragbaren Datenträgern zu schaffen.

Diese Aufgabe wird durch den tragbaren Datenträger gemäß Patentanspruch 1 gelöst. Weiterbildungen der Erfindung sind in den abhängigen Ansprüchen definiert.

Der erfindungsgemäße tragbare Datenträger, der insbesondere eine Chipkarte ist, umfasst einen oder mehrere Sensoren, welche jeweils dazu eingerichtet sind, über die Erfassung von Messwerten ein Freilegen einer Oberfläche des (zuvor abgedeckten) tragbaren Datenträgers als Detektionsereignis zu detektieren. Auf diese Weise kann mit dem oder den Sensoren das Entfernen des tragbaren Datenträgers aus einem Aufbewahrungsmedium, wie z.B. einem Geldbeutel, bzw. das Öffnen eines entsprechenden Aufbewahrungsmediums mit darin enthaltenem tragbarem Datenträger erfasst werden.

Der erfindungsgemäße Datenträger umfasst ferner ein oder mehrere Ausgabemittel zur Ausgabe von durch einen Benutzer wahrnehmbaren Signalen. Der Datenträger ist dabei dazu eingerichtet, über das oder die Ausgabemittel ein Signal bei Erfüllung eines Detektionskriteriums auszugeben, wobei das Detektionskriterium dann erfüllt ist, wenn das Detektionsereignis von zumindest einem Teil der Sensoren detektiert wird.

Der erfindungsgemäße Datenträger weist den Vorteil auf, dass der Benutzer bei einer anstehenden Nutzung des Datenträgers, d.h. beim Öffnen eines Aufbewahrungsmediums mit darin enthaltenem Datenträger bzw. beim Entfernen des Datenträgers aus dem Aufbewahrungsmedium, auf das Vorhandensein des Datenträgers aufmerksam gemacht wird, was die Nutzung des Datenträgers erhöht. Die Erfindung ist besonders für solche tragbaren Datenträger bzw. Chipkarten vorteilhaft, die im Kartenfach des Geldbeutels eines Benutzers obenauf liegen, da der Benutzer in diesem Fall sofort über eine entsprechende Ausgabe des oder der Ausgabemittel das Vorhandensein des tragbaren Datenträgers erkennt.

Der erfindungsgemäße tragbare Datenträger kann für verschiedene Verwendungszwecke vorgesehen sein. In bevorzugten Varianten ist der tragbare Datenträger eine Karte zur Durchführung von monetären Transaktionen, wie z.B. eine Kreditkarte oder eine andere Bankkarte. Ebenso kann der tragbare Datenträger eine Karte zur Ticketbuchung und/oder eine Karte zur Zugangsberechtigung eines Nutzers und/oder ein Sicherheitselement sein.

In einer weiteren bevorzugten Variante umfassen der oder die Sensoren des tragbaren Datenträgers zumindest einen Lichtsensor, welcher derart ausgestaltet ist, dass er im Betrieb als Messwerte Helligkeitswerte der Umgebung um den tragbaren Datenträger erfasst und als Detektionsereignis detektiert, dass eine Veränderung der Helligkeitswerte eine vorbestimmte Bedingung erfüllt. Insbesondere detektiert der Lichtsensor als Detektionsereignis, dass die Helligkeitswerte eine vorbestimmte Schwelle überschreiten oder dass die betragsmäßige zeitliche Veränderung der Helligkeitswerte in einem vorbestimmten Zeitraum eine vorbestimmte Schwelle überschreitet. Hierdurch kann einfach und kostengünstig das Ereignis des Freilegens einer Oberfläche des tragbaren Datenträgers und hierdurch das Öffnen eines Aufbewahrungsmediums mit darin enthaltenem Datenträger bzw. das Entfernen des Datenträgers aus dem Aufbewahrungsmedium erfasst werden.

Alternativ oder zusätzlich können der oder die Sensoren zumindest einen ersten Schallsensor umfassen, welcher derart ausgestaltet ist, dass er im Betrieb als Messwerte Lautstärkewerte erfasst, welche durch die Umgebung um den ersten Schallsensor erzeugt werden. Dabei detektiert dieser erste Schallsensor als Detektionsereignis, dass eine Veränderung der Lautstärkewerte eine vorbestimmte Bedingung erfüllt. Insbesondere detektiert der erste Schallsensor als Detektionsereignis, dass die Lautstärkewerte eine vorbestimmte Schwelle überschreiten oder dass die betragsmäßige zeitliche Veränderung der Lautstärkewerte in einem vorbestimmten Zeitraum eine vorbestimmte Schwelle überschreitet. In dieser Variante werden Umgebungsgeräusche, die nicht durch den tragbaren Datenträger selbst erzeugt wurden, zur Detektion des Detektionsereignisses verwendet.

In einer weiteren Variante des erfindungsgemäßen tragbaren Datenträgers umfassen der oder die Sensoren zumindest einen zweiten Schallsensor, weleher derart ausgestaltet ist, dass er im Betrieb als Messwerte Lautstärkewerte erfasst, welche durch zumindest einen Schallerzeuger des tragbaren Datenträgers erzeugt werden. Als Detektionsereignis detektiert der zweite Schallsensor, dass eine Veränderung der Lautstärkewerte eine vorbestimmte Bedingung erfüllt. Insbesondere detektiert der erste Schallsensor als Detektionsereignis, dass die Lautstärkewerte eine vorbestimmte Schwelle unterschreiten oder dass die betragsmäßige zeitliche Veränderung der Lautstärkewerte in einem vorbestimmten Zeitraum eine vorbestimmte Schwelle überschreitet. Hieraus kann darauf geschlossen werden, dass die von dem Schallerzeuger ausgesendeten Schallwellen nicht mehr direkt an einer Fläche eines Aufbewahrungsmediums reflektiert werden, was bedeutet, dass das Aufbewahrungsmedium mit dem darin enthaltenen tragbaren Datenträger geöffnet wurde bzw. der tragbare Datenträger daraus entfernt wurde.

In einer weiteren bevorzugten Variante umfassen der oder die Sensoren zumindest einen Temperatursensor, welcher derart ausgestaltet ist, dass er im Betrieb als Messwerte Temperaturwerte der Umgebung um den Temperatursensor erfasst. Dabei detektiert der Temperatursensor als Detektionsereignis, dass eine Veränderung der Temperaturwerte eine vorbestimmte Bedingung erfüllt. Insbesondere detektiert der Temperatursensor als Detektionsereignis, dass die Temperaturwerte eine vorbestimmte Schwelle überschreiten oder dass die betragsmäßige zeitliche Veränderung der Temperaturwerte in einem vorbestimmten Zeitraum eine vorbestimmte Schwelle überschreitet, was darauf schließen lässt, dass der tragbare Datenträger aus einem Aufbewahrungsmedium entfernt wurde bzw. das Aufbewahrungsmedium mit dem darin enthaltenen tragbaren Datenträger geöffnet wurde.

Je nach Ausführungsform können die in dem tragbaren Datenträger vorgesehenen Ausgabemittel unterschiedlich ausgestaltet sein. In einer Variante umfassen das oder die Ausgabemittel ein visuelles Ausgabemittel, insbesondere eine oder mehrere LEDs und gegebenenfalls auch ein Display oder ein anderes visuelles Ausgabemittel. Alternativ oder zusätzlich kann als Ausgabemittel auch ein akustisches Ausgabemittel, d.h. ein entsprechender Lautsprecher, in dem tragbaren Datenträger integriert sein.

In einer weiteren Variante des erfindungsgemäßen Datenträgers ist das obige Detektionskriterium dann erfüllt, wenn das Detektionsereignis von lediglich einem einzelnen (beliebigen) Sensor detektiert wird. Auf diese Weise wird eine schnelle Reaktion des tragbaren Datenträgers in Antwort auf das Detektionsereignis sichergestellt.

In einer weiteren Variante umfasst der tragbare Datenträger mehrere Sensoren, wobei das Detektionskriterium nur dann erfüllt ist, wenn das Detektionsereignis von allen der mehreren Sensoren detektiert wird. Mit anderen Worten erfolgt eine Ausgabe über das oder die Ausgabemittel dann nicht, wenn nur ein Teil der Sensoren das Detektionsereignis detektiert. Hierdurch wird eine zuverlässige Funktionsweise des tragbaren Datenträgers sichergestellt.

In einer weiteren Variante des erfindungsgemäßen Datenträgers ist das Detektionskriterium das ausschließlich zu erfüllende Kriterium für die Ausgabe eines Signals über das oder die Ausgabemittel. Es werden somit keine weiteren Kriterien, wie z.B. die Anwesenheit eines Lesefelds oder dergleichen, berücksichtigt. Hierdurch wird eine einfache Überprüfung des Detektionskriterium im tragbaren Datenträger realisiert.

In einer weiteren Variante der Erfindung werden bei der Erfüllung des Detektionskriteriums neben der Ausgabe eines Signals über das oder die Ausgabemittel ferner eine oder mehrere (weitere) Funktionen des tragbaren Datenträgers aktiviert. Insbesondere umfassen das oder die Funktionen eine Kommunikationsfunktion des tragbaren Datenträgers mit einem externen Gerät, vorzugsweise eine kontaktlose Kommunikationsfunktion. Es werden somit entsprechende Funktionen des tragbaren Datenträgers nur dann freigegeben, wenn auch tatsächlich die Nutzung des tragbaren Datenträgers durch einen Benutzer ansteht. Auf diese Weise kann eine missbräuchliche Verwendung des tragbaren Datenträgers durch einen Dritten vermieden werden. Ferner wird der Energieverbrauch des tragbaren Datenträgers herabgesetzt.

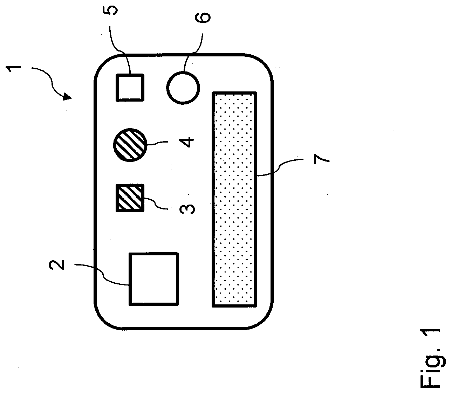

Ein Ausführungsbeispiel der Erfindung wird nachfolgend anhand der beigefügten Fig. 1 detailliert beschrieben. Diese Figur zeigt in schematischer Darstellung eine Variante eines erfindungsgemäßen tragbaren Datenträgers.

Im Folgenden wird die Erfindung anhand eines tragbaren Datenträgers in der Form einer Chipkarte 1 beschrieben. Die Chipkarte beinhaltet eine Mikroprozessoreinheit, welche in einem Chip 2 der Karte integriert ist. In der hier beschriebenen Ausführungsform ist die Chipkarte eine Karte zur Durchführung von monetären Transaktionen (z.B. eine Kreditkarte), wobei diese Transaktionen über die Mikroprozessoreinheit gesteuert werden. Vorzugweise umfasst die Chipkarte hierzu eine kontaktlose Schnittstelle (nicht gezeigt), welche mit einem entsprechenden Lesegerät kommuniziert, wobei über diese Kommunikation die monetären Transaktionen veranlasst werden.

In der Ausführungsform der Fig. 1 umfasst die Chipkarte 1 im oberen Bereich einen Lichtsensor 3 sowie einen Schallsensor in der Form eines Mikrofons 4. Darüber hinaus sind ein optisches Ausgabemittel in der Form einer LED 5 und/ oder eine Anzeigeeinrichtung (Display) sowie ein akustisches Ausgabemittel in der Form eines Lautsprechers 6 vorgesehen. Wie schematisch durch das gepunktete Feld 7 angedeutet, sind auf der Karte in einem entsprechenden Textfeld Informationen aufgebracht, insbesondere der Name des Karteninhabers sowie die Kartennummer und das Ablaufdatum der Karte.

Mittels der beiden Sensoren 3 und 4 wird durch die Karte 1 das Freilegen einer Oberfläche der Karte und hierdurch das Öffnen eines Aufbewahrungsmediums mit darin enthaltener Karte bzw. die Herausnahme der Karte aus dem Aufbewahrungsmedium erfasst. Um dies zu erreichen, detektiert der Lichtsensor 3 das Ereignis, dass die durch diesen Sensor erfasste Umgebungshelligkeit einen vorbestimmten Schwellwert überschreitet. In Analogie detektiert das Mikrophon 4 das Ereignis, dass die von ihm erfasste Umgebungslautstärke eine vorbestimmte Schwelle überschreitet.

Sobald einer oder gegebenenfalls beide der Sensoren 3 und 4 das entsprechende Ereignis des Überschreitens eines Schwellwerts detektieren, führt dies zu einem Aufleuchten der LED 5 bzw. alternativ oder zusätzlich zur Ausgabe eines akustischen Signals über den Lautsprecher 6. Auf diese Weise wird ein Benutzer, der seinen Geldbeutel für einen Bezahlvorgang öffnet, auf das Vorhandensein einer Kreditkarte hingewiesen, welche er für den Bezahlvorgang einsetzen kann. Hierdurch wird eine erhöhte Nutzung der Kreditkarte durch den Benutzer erreicht.

In einer weiteren abgewandelten Ausführungsform ist anstatt oder zusätzlich zu dem Schallsensor 4 ein weiterer Schallsensor vorgesehen, der mit einem (nicht gezeigten) Schallerzeuger auf der Karte wechselwirkt. Dabei sendet die Karte aktiv, z.B. periodisch, Schallwellen über den Schallerzeuger aus und misst das zurückkommende Signal. Sollte sich dieses aufgrund des Öffnens eines Aufbewahrungsmediums mit darin befindlicher Karte bzw. aufgrund der Herausnahme der Karte aus dem Aufbewahrungsmedium verändern, wird wiederum über die LED 5, die Anzeigeeinrichtung (nichtgezeigt) und/ oder den Lautsprecher 6 ein entsprechendes Signal für den Benutzer ausgegeben. Insbesondere wird das Signal dann erzeugt, wenn die über den weiteren Schallsensor detektierten Schallwellen eine vorbestimmte Schwelle unterschreiten, da sich hieraus darauf schließen lässt, dass die Schallwellen nicht mehr direkt am entsprechenden Aufbewahrungsmedium reflektiert werden.

In einer weiteren abgewandelten Ausführungsform kann zusätzlich oder anstelle der Sensoren 3 und 4 auch ein Temperatursensor verwendet werden, wobei wiederum die LED 5 und/oder die Anzeigeeinrichtung angeschaltet wird bzw. ein akustisches Signal durch den Lautsprecher 6 erzeugt wird, wenn Temperaturänderungen auftreten.

In einer weiteren bevorzugten Ausführungsform ist an das Detektionsereignis des Freilegens der Oberfläche der Karte die Aktivierung vorbestimmter Funktionalitäten der Karte gekoppelt. Insbesondere wird die oben beschriebene kontaktlose Schnittstelle der Karte erst dann aktiviert, wenn das Detektionsereignis erfasst wurde. Hierdurch wird eine missbräuchliche Verwendung der Karte durch unbefugte Dritte vermieden. Ebenso kann die Aktivierung eines Displays bzw. eines Fingerabdruck-Sensors auf der Karte erst beim Auftreten des Detektionsereignisses erfolgen. Hierdurch wird der Energieverbrauch der Karte reduziert, da bestimmte Funktionen nur bei deren Nutzung angeschaltet werden.

Die im Vorangegangenen beschriebenen Ausführungsformen der Erfindung weisen eine Reihe von Vorteilen auf. Insbesondere wird der Benutzer der Karte durch ein optisches bzw. akustisches Signal auf die Karte aufmerksam gemacht, wenn er diese aus einem Aufbewahrungsmedium und insbesondere seiner Geldbörse entfernt. Die Verwendung der Karte und deren Akzeptanz durch den Benutzer werden hierdurch erhöht. Darüber hinaus kann in speziellen Ausführungsformen der Energieverbrauch der Karte reduziert werden bzw. deren missbräuchliche Verwendung vermieden werden, indem bestimmte Funktionalitäten der Karte erst dann freigeschaltet werden, wenn diese aus einem Aufbewahrungsmedium entfernt wird.

### Positionsliste

- 1: Chipkarte
- 2: Chip
- 3: Lichtsensor
- 4: Schallsensor
- 5: LED
- 6: Lautsprecher
- 7: Textfeld

## Patentansprüche

1. Tragbarer Datenträger, umfassend
- einen oder mehrere Sensoren (3, 4), welche jeweils dazu eingerichtet sind, über die Erfassung von Messwerten ein Freilegen einer Oberfläche des zuvor abgedeckten tragbaren Datenträgers (1) als Detektionsereignis zu detektieren;
- ein oder mehrere Ausgabemittel (5, 6) zur Ausgabe von durch einen Benutzer wahrnehmbaren Signalen;
wobei der tragbare Datenträger (1) dazu eingerichtet ist, über das oder die Ausgabemittel (5, 6) ein Signal bei Erfüllung eines Detektionskriteriums auszugeben, wobei das Detektionskriterium dann erfüllt ist, wenn das Detektionsereignis von zumindest einem Teil der Sensoren (3,4) detektiert wird,
**dadurch gekennzeichnet, dass**
der oder die Sensoren (3,4) zumindest einen ersten Schallsensor (4) umfassen, welcher derart ausgestaltet ist, dass er im Betrieb als Messwerte Lautstärkewerte erfasst, welche durch die Umgebung um den ersten Schallsensor (4) erzeugt werden und nicht durch den tragbaren Datenträger selbst erzeugt wurden, und dass er als Detektionsereignis detektiert, dass eine Veränderung der Lautstärkewerte eine vorbestimmte Bedingung erfüllt.

2. Tragbarer Datenträger nach Anspruch 1, **dadurch gekennzeichnet, dass** der tragbare Datenträger (1) eine Chipkarte ist.

3. Tragbarer Datenträger nach Anspruch 1, **dadurch gekennzeichnet, dass** der tragbare Datenträger (1) eine Karte zur Durchführung von monetären Transaktionen und/oder eine Karte zur Ticketbuchung und/ oder eine Karte zur Zugangsberechtigung eines Benutzers und/oder ein Sicherheitselement ist.

4. Tragbarer Datenträger nach Anspruch 1, 2 oder 3, **dadurch gekennzeichnet, dass** die Sensoren (3, 4) zumindest einen Lichtsensor (3) umfassen, welcher derart ausgestaltet ist, dass er im Betrieb als Messwerte Helligkeitswerte der Umgebungshelligkeit um den tragbaren Datenträger (1) erfasst und als Detektionsereignis detektiert, dass eine Veränderung der Helligkeitswerte eine vorbestimmte Bedingung erfüllt.

5. Tragbarer Datenträger nach einem der vorhergehenden Ansprüche, **dadurch gekennzeichnet, dass** die Sensoren (3, 4) zumindest einen zweiten Schallsensor umfassen, welcher derart ausgestaltet ist, dass er im Betrieb als Messwerte Lautstärkewerte erfasst, welche durch zumindest einen Schallerzeuger des tragbaren Datenträgers (1) erzeugt werden, und dass er als Detektionsereignis detektiert, dass die Lautstärkewerte eine vorbestimmte Schwelle unterschreiten oder dass die betragsmäßige zeitliche Veränderung der Lautstärkewerte in einem vorbestimmten Zeitraum eine vorbestimmte Schwelle überschreitet.

6. Tragbarer Datenträger nach einem der vorhergehenden Ansprüche, **dadurch gekennzeichnet, dass** die Sensoren (3, 4) zumindest einen Temperatursensor umfassen, welcher derart ausgestaltet ist, dass er im Betrieb als Messwerte Temperaturwerte der Umgebung um den Temperatursensor erfasst und als Detektionsereignis detektiert, dass eine Veränderung der Temperaturwerte eine vorbestimmte Bedingung erfüllt.

7. Tragbarer Datenträger nach einem der vorhergehenden Ansprüche, **dadurch gekennzeichnet, dass** das oder die Ausgabemittel (5, 6) ein visuelles Ausgabemittel (5), eine Anzeigeeinrichtung, und/ oder ein akustisches Ausgabemittel (6) umfassen.

8. Tragbarer Datenträger nach Anspruch 7, **dadurch gekennzeichnet, dass** das visuelle Ausgabemittel (5) eine oder mehrere LEDs ist.

9. Tragbarer Datenträger nach einem der vorhergehenden Ansprüche, **dadurch gekennzeichnet, dass** das Detektionskriterium dann erfüllt ist, wenn das Detektionsereignis von einem einzelnen Sensor (3,4) detektiert wird.

10. Tragbarer Datenträger nach einem der vorhergehenden Ansprüche 1 bis 9, **dadurch gekennzeichnet, dass** der tragbare Datenträger (1) mehrere Sensoren (3,4) umfasst und das Detektionskriterium dann erfüllt ist, wenn das Detektionsereignis von allen der mehreren Sensoren (3, 4) detektiert wird.

11. Tragbarer Datenträger nach einem der vorhergehenden Ansprüche, **dadurch gekennzeichnet, dass** das Detektionskriterium das ausschließlich zu erfüllende Kriterium für die Ausgabe eines Signals über das oder die Ausgabemittel (5, 6) ist.

12. Tragbarer Datenträger nach einem der vorhergehenden Ansprüche, **dadurch gekennzeichnet, dass** bei Erfüllung des Detektionskriteriums zumindest eine weitere Funktion des tragbaren Datenträgers (1) aktiviert wird.

13. Tragbarer Datenträger nach Anspruch 12, **dadurch gekennzeichnet, dass** die zumindest eine weitere Funktion eine Kommunikationsfunktion des tragbaren Datenträgers (1) mit einem externen Gerätumfasst.

14. Tragbarer Datenträger nach Anspruch 13, **dadurch gekennzeichnet, dass** die zumindest eine weitere Funktion eine kontaktlose Kommunikationsfunktion umfasst.

## Claims

1. A portable data carrier comprising
- one or several sensors (3, 4) which are respectively arranged for detecting via the capture of measurement values a laying open of a surface of the previously covered portable data carrier (1) as a detection event;
- one or several output means (5, 6) for outputting signals perceptible by a user;
wherein the portable data carrier (1) is arranged for outputting a signal via the one or more output means (5, 6) upon satisfaction of a detection criterion, wherein the detection criterion is satisfied when the detection event is detected by at least a part of the sensors (3, 4),
**characterized in that**
the one or more sensors (3, 4) comprise at least one first sound sensor (4) which is configured such that during operation it captures loudness values which are generated by the surroundings around the first sound sensor (4) and were not generated by the portable data carrier itself as measurement values and that it detects as a detection event that a change of the loudness values satisfies a predetermined condition.

2. The portable data carrier according to claim 1, **characterized in that** the portable data carrier (1) is a chip card.

3. The portable data carrier according to claim 1, **characterized in that** the portable data carrier (1) is a card for carrying out monetary transactions and/or a card for ticket reservation and/or a card for a user's access authorization and/or a security element.

4. The portable data carrier according to claim 1, 2 or 3, **characterized in that** the sensors (3, 4) comprise at least one light sensor (3) which is configured such that during operation it captures brightness values of the surrounding brightness around the portable data carrier (1) as measurement values and detects as a detection event that a change of the brightness values satisfies a predetermined condition.

5. The portable data carrier according to any of the preceding claims, **characterized in that** the sensors (3, 4) comprise at least one second sound sensor which is configured such that during operation it captures loudness values which are generated by at least one sound generator of the portable data carrier (1) as measurement values and that it detects as a detection event that the loudness values undershoot a predetermined threshold or that the amount of temporal change of the loudness values exceeds a predetermined threshold in a predetermined time period.

6. The portable data carrier according to any of the preceding claims, **characterized in that** the sensors (3, 4) comprise at least one temperature sensor which is configured such that during operation it captures temperature values of the surroundings around the temperature sensor as measurement values and detects as a detection event that a change of the temperature values satisfies a predetermined condition.

7. The portable data carrier according to any of the preceding claims, **characterized in that** the one or more output means (5, 6) comprise a visual output means (5), a display device, and/or an acoustic output means (6).

8. The portable data carrier according to claim 7, **characterized in that** the visual output means (5) is one or several LEDs.

9. The portable data carrier according to any of the preceding claims, **characterized in that** the detection criterion is satisfied when the detection event is detected by one single sensor (3, 4).

10. The portable data carrier according to any of the preceding claims 1 to 9, **characterized in that** the portable data carrier (1) comprises several sensors (3, 4) and the detection criterion is satisfied when the detection event is detected by all of the several sensors (3, 4).

11. The portable data carrier according to any of the preceding claims, **characterized in that** the detection criterion is the criterion to be exclusively satisfied for the output of a signal via the one or more output means (5, 6).

12. The portable data carrier according to any of the preceding claims, **characterized in that** upon satisfaction of the detection criterion at least one further function of the portable data carrier (1) is activated.

13. The portable data carrier according to claim 12, **characterized in that** the at least one further function comprises a communication function of the portable data carrier (1) with an external device

14. The portable data carrier according to claim 13, **characterized in that** the at least one further function comprises a contactless communication function.

## Revendications

1. Support de données portable comprenant
- un ou plusieurs capteurs (3, 4) respectivement conçus pour détecter, en tant qu'événement de détection, par le biais de la saisie de valeurs de mesure, un découvrement d'une surface du support de données (1) portable auparavant recouvert ;
- un ou plusieurs moyens d'émission (5, 6) pour l'émission de signaux perceptibles par un utilisateur,
cependant que le support de données (1) portable est conçu pour, par le biais du ou des moyens d'émission (5, 6), émettre un signal dans le cas de la réalisation d'un critère de détection, cependant que le critère de détection est réalisé quand l'événement de détection est détecté par au moins une partie des capteurs (3, 4),
**caractérisé en ce que**
le ou les capteurs (3, 4) comprennent au moins un premier capteur acoustique (4) configuré de telle façon que, lors du fonctionnement, il saisit en tant que valeurs de mesure des volumes générés par l'environnement autour du premier capteur acoustique (4) et non par le support de données portable lui-même, et qu'il détecte en tant qu'événement de détection qu'une modification des volumes remplit une condition prédéterminée.

2. Support de données portable selon la revendication 1, **caractérisé en ce que** le support de données portable (1) est une carte à puce.

3. Support de données portable selon la revendication 1, **caractérisé en ce que** le support de données portable (1) est une carte pour l'exécution de transactions monétaires et/ou une carte pour la réservation de billets et/ou une carte pour l'autorisation d'accès d'un utilisateur et/ou un élément de sécurité.

4. Support de données portable selon la revendication 1, 2 ou 3, **caractérisé en ce que** les capteurs (3, 4) comprennent au moins un capteur de lumière (3) configuré de telle façon que, lors du fonctionnement, il saisit en tant que valeurs de mesure des valeurs de luminosité de la luminosité de l'environnement autour du support de données portable (1), et détecte en tant qu'événement de détection qu'une modification des valeurs de luminosité remplit une condition prédéterminée.

5. Support de données portable selon une des revendications précédentes, **caractérisé en ce que** les capteurs (3, 4) comprennent au moins un deuxième capteur acoustique qui est configuré de telle façon que, lors du fonctionnement, il saisit en tant que valeurs de mesure des volumes générés par au moins un générateur de son du support de données portable (1), et qu'il détecte en tant qu'événement de détection que les volumes sous-dépassent un seuil prédéterminé ou que le montant de la modification temporelle des volumes dans un laps de temps prédéterminé dépasse un seuil prédéterminé.

6. Support de données portable selon une des revendications précédentes, **caractérisé en ce que** les capteurs (3, 4) comprennent au moins un capteur de température qui est configuré de telle façon que, lors du fonctionnement, il saisit en tant que valeurs de mesure des valeurs de température de l'environnement autour du capteur de température et détecte en tant qu'événement de détection qu'une modification des valeurs de température remplit une condition prédéterminée.

7. Support de données portable selon une des revendications précédentes, **caractérisé en ce que** le ou les moyens d'émission (5, 6) comprennent un moyen visuel d'émission (5), un équipement d'affichage, et/ou un moyen d'émission (6) acoustique.

8. Support de données portable selon la revendication 7, **caractérisé en ce que** le moyen visuel d'émission (5) est une ou plusieurs LED.

9. Support de données portable selon une des revendications précédentes, **caractérisé en ce que** le critère de détection est réalisé quand l'événement de détection est détecté par un capteur (3, 4) individuel.

10. Support de données portable selon une des revendications de 1 à 9, **caractérisé en ce que** le support de données portable (1) comprend plusieurs capteurs (3, 4) et que le critère de détection est réalisé quand l'événement de détection est détecté par tous des plusieurs capteur (3, 4).

11. Support de données portable selon une des revendications précédentes, **caractérisé en ce que** le critère de détection est le critère exclusivement à réaliser réalisé pour l'émission d'un signal par le biais du ou des moyens d'émission (5, 6).

12. Support de données portable selon une des revendications précédentes, **caractérisé en ce que**, dans le cas de la réalisation d'un critère de détection, au moins une autre fonction du support de données portable (1) est activée.

13. Support de données portable selon la revendication 12, **caractérisé en ce que** la au moins une autre fonction comprend une fonction de communication du support de données portable (1) avec un appareil externe.

14. Support de données portable selon la revendication 13, **caractérisé en ce que** la au moins une autre fonction comprend une fonction de communication sans contact.
